# EUROPEAN PATENT APPLICATION

(11) **EP 3 246 850 A1**
(43) Date of publication of application: **22.11.2017**
(21) Application number: 16196641.1
(22) Date of filing: 31.10.2016
(51) Int. Cl.: G06K 9/00

(54) **IMAGE SENDING METHOD AND APPARATUS, COMPUTER PROGRAM AND RECORDING MEDIUM**

(30) Priority: 20.05.2016 CN 201610341840
(71) Applicant: Beijing Xiaomi Mobile Software Co., Ltd., Beijing 100085 (CN)
(72) Inventor: MA, Xuan, BEIJING, 100085 (CN); FAN, Dian, BEIJING, 100085 (CN); XING, Xinyan, BEIJING, 100085 (CN); FENG, Xiaochuan, BEIJING, 100085 (CN); LI, Haohua, BEIJING, 100085 (CN); DU, Junzeng, BEIJING, 100085 (CN)
(74) Representative: Delumeau, François Guy

(57) **Abstract**

The present invention relates to an image sending method and apparatus, a computer program and a recording medium. The method includes: acquiring (11) a target image; extracting (12) person characteristic information from the target image; and sending (13) the target image to a target terminal associated with the person characteristic information.

## Description

### TECHNICAL FIELD

The present invention relates to the technical field of photographing, and more particularly, to an image sending method and apparatus, a computer program and a recording medium.

### BACKGROUND

Pertaining to biometric recognition, camera-implemented human face recognition technology locks on a human face (for example by determining the position of images of a human face) in a picture by recognizing characteristic information in the picture such as eyes, mouth and so on. This enables the camera to automatically take the human face as the primary object to be photographed and in turn automatically adjust the focus length and exposure amount, in order to ensure the sharpness and accurate exposure of the human face. Currently, the human face recognition technology has become mature, the speed of human face detection is fast, and its accuracy is reliable.

At present, the camera-implemented human face recognition technology can only be used in one camera, and shot pictures can only be stored. In order to send a shot picture to someone, a user has to perform cumbersome operations. For example, in order to send a picture, the user has to open a picture library, look for the corresponding picture, select an application for sending the picture and then approve the sending, which results in low efficiency of image sending.

### SUMMARY

Embodiments of the present invention provide an image sending method and apparatus, a computer program and a recording medium as follows.

According to a first aspect of the embodiments of the present invention, an image sending method is provided, including: acquiring a target image; extracting person characteristic information from the target image; and sending the target image to a target terminal associated with the person characteristic information.

In a particular embodiment, the step of acquiring the target image comprises acquiring the target image through an image collection device.

In a a particular embodiment, the step of sending the target image to the target terminal associated with the person characteristic information comprises:
- acquiring target address information of a contact associated with the person characteristic information; and
- sending the target image to the target terminal according to the target address information.

In a particular embodiment, the person characteristic information comprises face characteristic information; and the step of acquiring the target address information of the contact associated with the person characteristic information comprises:
- acquiring a contact information database which comprises correspondences between head portrait information and address information of contacts;
- traversing the contact information database to acquire target head portrait information corresponding to the face characteristic information; and
- acquiring target address information corresponding to the target head portrait information from the contact information database.

In a particular embodiment, the person characteristic information further comprises at least one of clothes information, accessories information and body type characteristic information; and the target address information comprises any one of a target account and a phone number.

In a particular embodiment, the target address information comprises the target account;
- the step of acquiring the target address information of the contact associated with the person characteristic information comprises: acquiring the target account from a contact database of a target application; and
   the step of sending the target image to the target terminal according to the target address information comprises: sending, by means of the target application, the target image to a target terminal which has logged on the target account.

According to a second aspect of the embodiments of the present invention, an image sending apparatus is provided, including: an acquisition module configured to acquire a target image; an extraction module configured to extract person characteristic information from the target image acquired by the acquisition module; and a sending module configured to send the target image to a target terminal associated with the person characteristic information extracted by the extraction module.

In a particular embodiment, the acquisition module is configured to acquire the target image through an image collection device.

In a particular embodiment, the sending module comprises: an acquisition sub-module and a sending sub-module;
the acquisition sub-module is configured to acquire target address information of a contact associated with the person characteristic information extracted by the extraction module; and
the sending sub-module is configured to send the target image to the target terminal according to the target address information acquired by the acquisition sub-module.

In a particular embodiment, the person characteristic information comprises face characteristic information;
the acquisition sub-module comprises: a first acquisition unit, a second acquisition unit and a third acquisition unit;
the first acquisition unit is configured to acquire a contact information database which comprises correspondences between head portrait information and address information of contacts;
the second acquisition unit is configured to traverse the contact information database to acquire target head portrait information corresponding to the face characteristic information; and
the third acquisition unit is configured to acquire target address information corresponding to the target head portrait information from the contact information database.

In a particular embodiment, the person characteristic information further comprises at least one of clothes information, accessories information, and body type characteristic information; and the target address information comprises any one of a target account and a phone number.

In a particular embodiment, the target address information comprises the target account;
the acquisition sub-module comprises: a fourth acquisition unit and the fourth acquisition unit is configured to acquire the target account from a contact database of a target application; and
the sending sub-module is further configured to send, by means of the target application, the target image to a target terminal which has logged on the target account.

According to a third aspect of the embodiments of the present invention, an image sending apparatus is provided, including: a processor; and a memory for storing instructions executable by the processor. The processor is configured to: acquire a target image; extract person characteristic information from the target image; and send the target image to a target terminal associated with the person characteristic information.

In one particular embodiment, the steps of the image sending method are determined by computer program instructions.

Consequently, according to a fourth aspect, the invention is also directed to a computer program for executing the steps of an image sending method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present invention may have the following beneficial effects.

A mobile terminal or a server can acquire a target image, extract person characteristic information from the target image, and directly send the target image to a target terminal associated with the person characteristic information, thereby realizing timely and automatic image sending, effectively simplifying cumbersome operations for image sending, improving the timeliness and feasibility of image sending, and effectively improving convenience of a user's operation.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated into the description and constitute a part thereof, illustrate embodiments consistent with the present invention and, together with the description, serve to explain the principles of the present invention.
Fig. 1 is a flowchart of an image sending method according to an exemplary embodiment;
Fig. 2 is a flowchart of an image sending method according to another exemplary embodiment;
Fig. 3 is a flowchart of an image sending method according to still another exemplary embodiment;
Fig. 4 is a flowchart of an image sending method according to yet another exemplary embodiment;
Fig. 5 is a flowchart of an image sending method according to yet another exemplary embodiment;
Fig. 6 is a schematic diagram of interactions between a mobile terminal and a server in an image sending method according to an exemplary embodiment;
Fig. 7 is a block diagram of an image sending apparatus according to an exemplary embodiment;
Fig. 8 is a block diagram of an image sending apparatus according to another exemplary embodiment;
Fig. 9 is a block diagram of an image sending apparatus according to still another exemplary embodiment;
Fig. 10 is a block diagram of an image sending apparatus according to yet another exemplary embodiment;
Fig. 11 is a physical block diagram of an image sending apparatus according to an exemplary embodiment;
Fig. 12 is a block diagram of an image sending apparatus according to an exemplary embodiment; and
Fig. 13 is a block diagram of an image sending apparatus according to an exemplary embodiment.

The above drawings illustrate specific embodiments of the invention, which will be described in detail hereinafter. The drawings and description are not intended to limit the scope of the inventive concept in any manner but to explain the concept of the present invention to those skilled in the art with reference to the specific embodiments.

### DETAILED DESCRIPTION

Here, exemplary embodiments will be described in detail, examples of which are illustrated in the accompanying drawings. The following description refers to the accompanying drawings in which the same numbers in different figures represent the same or similar elements unless otherwise indicated. The implementations set forth in the following description of exemplary embodiments do not represent all implementations consistent with the present invention. Instead, they are merely examples of apparatuses and methods consistent with aspects related to the present invention as recited in the appended claims.

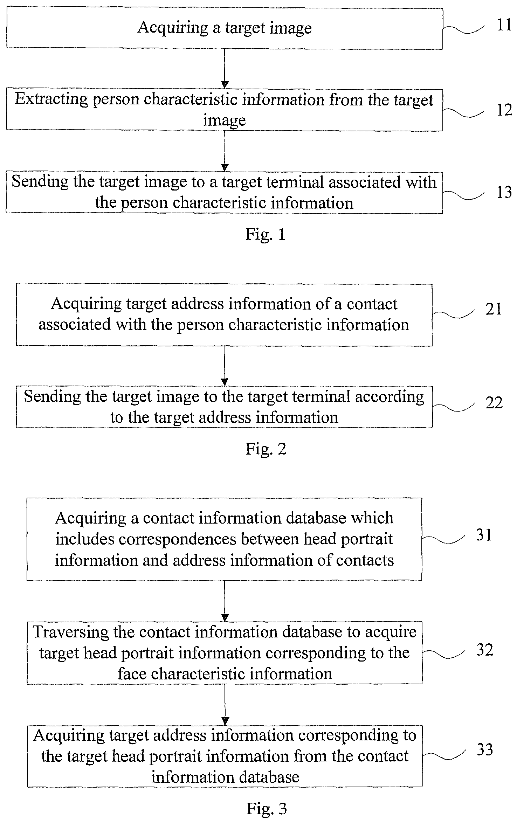

Fig. 1 is a flowchart of an image sending method according to an exemplary embodiment. In this embodiment, description is made by taking an example where the image sending method is applied to a mobile terminal or a server. As shown in Fig. 1, the image sending method may include the following steps.

In step 11, a target image is acquired.

Optionally, the target image is acquired through a camera, a video camera, a monitoring video camera and so on. For example, the target image may be a target image containing specific person characteristic information and may also be a target image containing specific thing or event information. The embodiment of the present invention does not limit the particular content of the acquired target image.

In step 12, person characteristic information is extracted from the target image.

As an example, in the embodiment of the present invention, the target image needs to be sent to a target terminal. Therefore, in order to determine a receiver of the target image, determination is made according to the person characteristic information contained in the target image in the embodiment of the present invention. However, since there are various contents in the target image, it first needs to determine whether the target image contains person characteristic information. If the target image contains person characteristic information, the person characteristic information is extracted.

In step 13, the target image is sent to a target terminal associated with the person characteristic information.

Optionally, the mobile terminal or the server stores correspondences between person characteristic information and target terminals. Therefore, when it is determined that there is a target terminal associated with the person characteristic information, the target image is sent to the target terminal automatically.

In summary, the image sending method provided in this embodiment acquires a target image, extracts person characteristic information from the target image, and directly sends the target image to a target terminal associated with the person characteristic information. As such, the disclosed solution allows a target image to be sent in time and automatically, which not only simplifies cumbersome operations for image sending and effectively improves convenience of a user's operation but also solves the problem of omitting to send an image due to a delay of the sending.

Optionally, in the image sending method provided in the above embodiment, step 11 (that is, the step of acquiring the target image) includes: acquiring the target image through an image collection device.

As an example, the image collection device can be a device having a photographing function such as a camera, a video camera or a monitoring video camera and so on. The image collection device can be an image device independent of the mobile terminal or the server and can also be an image collection device integrated in the mobile terminal or the server. The embodiment of the present invention does not limit the particular arrangement location of the image collection device.

In the embodiment of the present invention, a target image is acquired through an image collection device and then person characteristic information is extracted from the acquired target image, so that the target image is sent to a target terminal associated with the person characteristic information.

Fig. 2 is a flowchart of an image sending method according to another exemplary embodiment. The embodiment of the present invention further describes the image sending method on the basis of the above embodiment. Likewise, in this embodiment, description is made by taking an example where the image sending method is applied to a mobile terminal or a server. As shown in Fig. 2, as an example, an optional implementation of the above step 13 includes the following steps.

In step 21, target address information of a contact associated with the person characteristic information is acquired.

Optionally, when person characteristic information is extracted from the target image, a contact database can be searched for target address information of a contact associated with the person characteristic information, such as email address, QQ number, WeChat account, phone number or social application account and so on. The embodiment of the present invention does not limit the particular representation of the target address information.

It should be noted that the contact database can be a local contact database or a cloud contact database. This embodiment does not limit where the contact database is applied.

In step 22, the target image is sent to a target terminal according to the target address information.

In this embodiment, after target address information of a contact associated with the person characteristic information is acquired, the target image is directly sent to a target terminal corresponding to the target address information according to the determined target address information, in order to avoid forgetting to send the target image.

In summary, the image sending method provided in the embodiment of the present invention further describes how to send a target image to a target terminal associated with person characteristic information. Specifically, target address information of a contact associated with the person characteristic information is first acquired, and then the target image is sent to a target terminal according to the target address information which serves as the basis for information interaction between contacts. Therefore, the solution of acquiring target address information and sending thereto a target image simplifies the step of determining a target terminal associated with person characteristic information so that the target image can be sent to the corresponding target terminal in time, eliminates the need for the steps of looking for and selecting an image and determining an application for sending the image, simplifies the implementation of image sending, and effectively improves convenience of the user's operation.

Optionally, in the image sending method provided in the above embodiment, the person characteristic information includes at least one of: face characteristic information, clothes information, accessories information, and body type characteristic information. The person characteristic information in this embodiment may further include other characteristic information, such as hairstyle information and so on. Therefore, this embodiment does not limit the particular representation of person characteristic information, and all representations related to person characteristic information fall within the protection scope of the embodiment of the present invention.

Fig. 3 is a flowchart of an image sending method according to still another exemplary embodiment. The embodiment of the present invention further describes the image sending method on the basis of the above embodiment. Likewise, in this embodiment, description is made by taking an example where the image sending method is applied to a mobile terminal or a server. Since face characteristic information serves as a reference for recognizing a contact in the target image, when the person characteristic information includes face characteristic information, an optional implementation of the above step 21 includes the following steps as shown in Fig. 3 as an example.

In step 31, a contact information database is acquired, which includes correspondences between head portrait information and address information of contacts.

Optionally, after face characteristic information is extracted from a target image, a human face in the target image can be located using the skin color theory according to the skin color range of faces. Then, according to the face characteristic information, a contact information database is acquired, which stores head portrait information of contacts, target address information of the contacts, and correspondences between the head portraits and the target address information of the contacts.

In step 32, the contact information database is traversed to acquire target head portrait information corresponding to the face characteristic information.

Since the contact information database includes head portrait information of all contacts, if the contact information database stores target head portrait information corresponding to the face characteristic information, the target head portrait information corresponding to the face characteristic information can be acquired by traversing the contact information database.

In step 33, target address information corresponding to the target head portrait information is acquired from the contact information database.

It should be noted that, as described above, the contact information database includes correspondences between head portraits and target address information of contacts. Therefore, target address information corresponding to the target head portrait information can be acquired directly from the contact information database.

In summary, in the image sending method provided in the embodiment of the present invention, if the person characteristic information is face characteristic information, target head portrait information corresponding to the face characteristic information can be acquired by acquiring and traversing a contact information database which includes correspondences between head portrait information and address information of contacts. Target address information corresponding to the target head portrait information can be acquired from the contact information database. This technical solution enables accurate target address information to be acquired, is easy to implement, can locate target address information of the contact associated with the face characteristic information rapidly, and lays a foundation for the subsequent sending of the target image.

Optionally, in the image sending method provided in the above embodiment, the target address information of the contact associated with the person characteristic information includes any one of: a target account and a phone number. The embodiment of the present invention does not limit the particular representation of the target address information, which will not be described here redundantly.

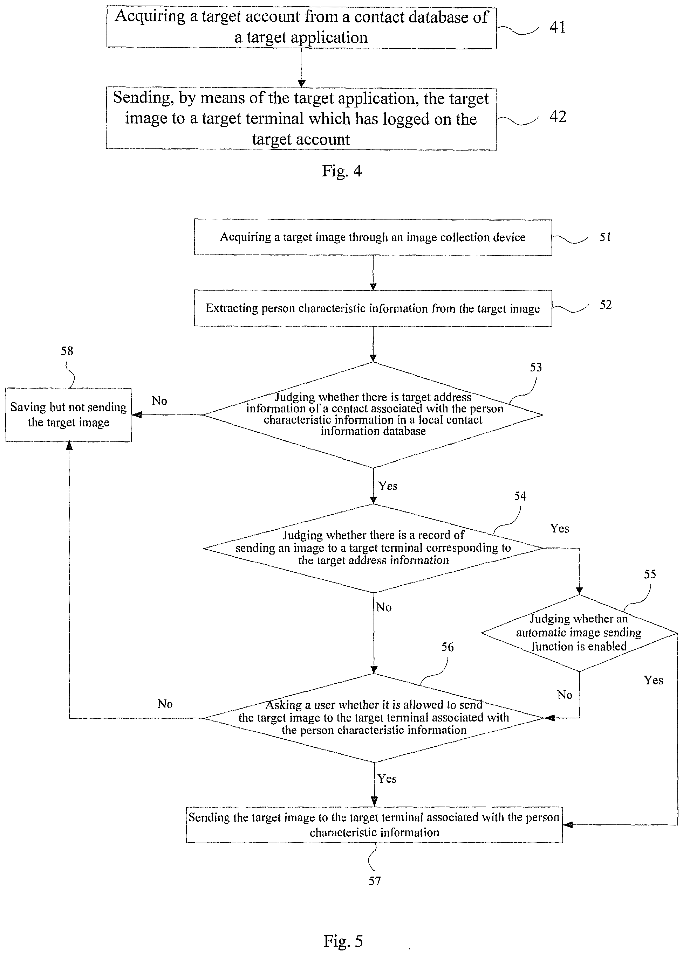

Fig. 4 is a flowchart of an image sending method according to yet another exemplary embodiment. The embodiment of the present invention further describes the image sending method on the basis of the above embodiment. Likewise, in this embodiment, description is made by taking an example where the image sending method is applied to a mobile terminal or a server. When the target address information includes a target account, an optional implementation of the above step 21 includes the following steps as shown in Fig. 4 as an example.

In step 41, the target account is acquired from a contact database of a target application.

The embodiment of the present invention is described mainly by taking an example where image sending is accomplished by means of a target application, which can be image social software and so on. In this embodiment, if the target address information is a target account, this target account needs to be first acquired from a contact database of the target application.

Accordingly, an optional implementation of the above step 22 includes the following steps.

In step 42, the target image is sent by means of the target application to a target terminal which has logged on the target account.

Optionally, if the target address information of the contact associated with the person characteristic information is a target account of a target application and the target account has been acquired, the target application can be used to send the target image to a target terminal which has logged on the target account. Thus, any target terminal which has logged on this target account can receive the target image, and the implementation is simple.

In summary, in the image sending method provided in the embodiment of the present invention, if the target address information includes a target account, the target account can be acquired from a contact database of a target application, and then the target image can be sent by means of the target application to a target terminal which has logged on this target account. The target application is a communication platform for contacts to perform information interaction. It can rapidly locate the target account of the contact associated with the person characteristic information according to the person characteristic information in the target image, and then automatically send the target image directly to the target terminal which has logged on the target account after acquiring the target image, thereby solving the problem of omitting to send an image due to a delay of the sending, improving the timeliness of image sending, and improving convenience of a user's operation.

Optionally, the executor of the image sending method provided in the above embodiment can be a mobile terminal and can also be a combination of a mobile terminal and a server. In the following embodiment, description is made by taking an example where the image sending method is applied to a mobile terminal.

Fig. 5 is a flowchart of an image sending method according to yet another exemplary embodiment. The embodiment of the present invention further describes the image sending method on the basis of the above various embodiments. The image sending method may include the following steps.

In step 51, a target image is acquired through an image collection device.

In step 52, person characteristic information is extracted from the target image.

In step 53, it is judged whether there is target address information of a contact associated with the person characteristic information in a local contact information database. If yes, step 54 is performed; otherwise, step 58 is performed.

As an example, if the person characteristic information is face characteristic information, the face characteristic information can be recognized by using a geometry-based human face recognition method, that is, according to the shapes of the eyes, the mouth, the nose and so on in a human face and the geometrical relationship among them. Alternatively, the recognition can be done through the use of a PCA-based human face recognition method, a neural network human face recognition method or an elastic matching human face recognition method, thereby concluding whether there is target address information of a contact associated with the face characteristic information in the local contact information database. Specific implementations of the above-described recognition and judgment are well known in the prior art and will not be described here.

In this embodiment, the face characteristic information is compared with contact head portrait information in the local contact information database, and it is determined whether there is target address information about a contact associated with the face characteristic information in the local contact information database. If it is determined that there is target address information of a contact associated with the face characteristic information in the local contact information database, the process proceeds to step 54, in which it is determined whether there is a record of sending an image to a target terminal corresponding to the target address information in the mobile terminal. If it is determined that there is no target address information associated with the face characteristic information in the local contact information database, the target image is simply stored for the user to determine subsequently whether or not to send the image. That is, the process proceeds to step 58.

In step 54, it is determined whether there is a record of sending an image to a target terminal corresponding to the target address information. If yes, step 55 is performed; otherwise, step 56 is performed.

If the mobile terminal judges that there is a record of sending an image to the target terminal corresponding to the target address information, it indicates that the mobile terminal previously sent an image to the target terminal associated with the person characteristic information. Therefore, when a target image containing the same person characteristic information is acquired again, the mobile terminal automatically sends the target image to the target terminal associated with the person characteristic information. Otherwise, it needs to ask the user whether to send the image.

In step 55, it is judged whether an automatic image sending function is enabled. If yes, step 57 is performed; otherwise, step 56 is performed.

The mobile terminal allows the user to enable or disable the automatic image sending function. Therefore, when the automatic image sending function is enabled and the mobile terminal judges that there is a record of sending an image to the target terminal corresponding to the target address information, the target image can be sent to the target terminal associated with the person characteristic information. However, when the automatic image sending function is not enabled, even though the mobile terminal judges that there is a record of sending an image to the target terminal corresponding to the target address information, it needs to ask the user whether it is allowed to send the target image to the target terminal associated with the person characteristic information. Then, it is determined whether or not to share the target image according to the user's response.

If the automatic image sending function is enabled and the mobile terminal judges that there is a record of sending an image to the target terminal corresponding to the target address information, the picture social software of the mobile terminal in the present invention automatically sends the target image to the target terminal associated with the person characteristic information, which simplifies operations for image sending and improves the feasibility of automatic image sending.

In step 56, the user is asked whether it is allowed to send the target image to the target terminal associated with the person characteristic information. If yes, the process proceeds to step 57; otherwise, step 58 is performed.

If there is no record of sending an image to the target terminal corresponding to the target address information, the mobile terminal sends out a query, asking whether to allow the current sending and possibly whether to allow automatic sending if a target image containing the person characteristic information is acquired in the future. If the user allows to send the target image to the target terminal associated with the person characteristic information, the mobile terminal sends the target image to the target terminal associated with the person characteristic information. Otherwise, the sending is canceled and the target image is just saved.

In step 57, the target image is sent to a target terminal associated with the person characteristic information.

In this step, in a possible case where the user previously allowed to send a target image containing person characteristic information to a target terminal associated with the person characteristic information, that is, there is an image sending record in the mobile terminal, another target image containing the same person characteristic information will be automatically sent to the target terminal associated with the person characteristic information when the mobile terminal acquires the target image.

In step 58, the target image is saved but not sent.

Since the user does not allow sending of the target image, the mobile terminal only saves the target image.

In summary, in the image sending method provided in this embodiment, person characteristic information in a target image is acquired; it is judged whether there is target address information of a contact associated with the person characteristic information in a local contact information database; when there is target address information of a contact associated with the person characteristic information in the local contact information database, it is judged whether there is any record of sending an image to a target terminal corresponding to the target address information; and when there is an image sending record, the target image is sent to the target terminal associated with the person characteristic information. In the technical solution of the present invention, by judging whether there is any record of sending an image to the target terminal corresponding to the target address information and then determining whether automatic sending is allowed, full advantage is taken of big data and face recognition, the difficulty of sending images between mobile terminals is reduced, the feasibility of automatic image sending is improved, the cumbersome procedure of image sending is simplified, and the problem of omitting to send an image due to a delay of the sending is solved.

As an example, the above step 12 or 52 may be implemented by detecting whether there is person characteristic information in a target image and extracting the person characteristic information from the target image only if it is contained in the target image.

Optionally, after a mobile terminal acquires a target image, it first needs to detect whether there is person characteristic information in the target image. The mobile terminal extract person characteristic information from the target image, only if there is person characteristic information in the target image. Otherwise, the mobile terminal merely stores the target image.

It should be noted that the mobile terminal can be any of such mobile terminals as a smart phone, a tablet computer, an MP3, a smart watch and so on, and can also be such a mobile terminal as a Bluetooth headset, an MP5 and so on, which will not be enumerated here. The present invention does not limit the particular type of the mobile terminal.

Optionally, in the following embodiment, description is made by taking an example where the image sending method is applied to an image sending system composed of a mobile terminal and a server.

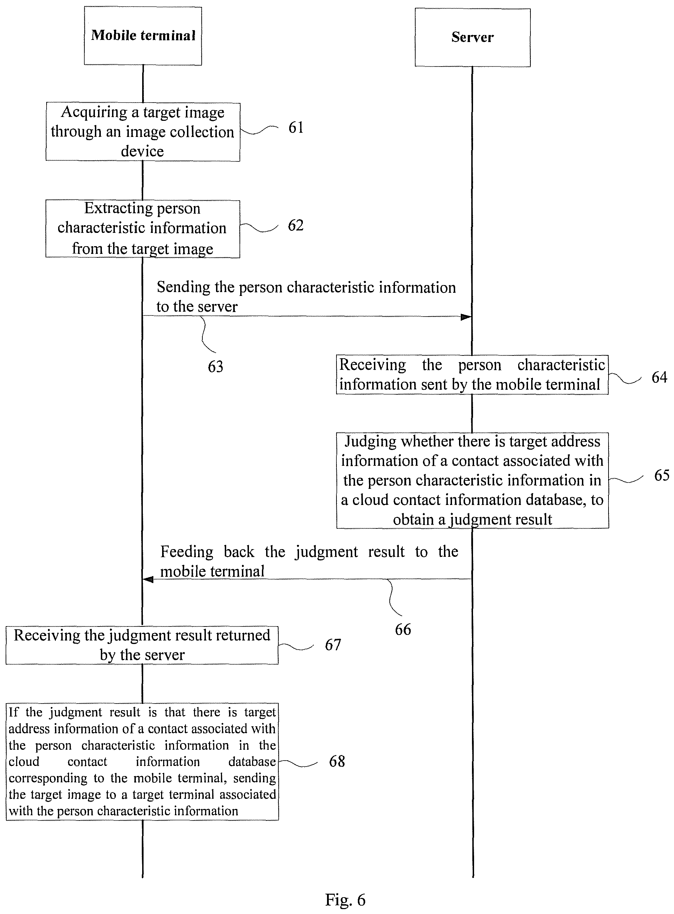

Fig. 6 is a schematic diagram of interactions between a mobile terminal and a server in an image sending method according to an exemplary embodiment. The embodiment of the present invention further describes the image sending method on the basis of the above various embodiments. As shown in Fig. 6, the image sending method may include the following steps.

In step 61, the mobile terminal acquires a target image through an image collection device.

In step 62, the mobile terminal extracts person characteristic information from the target image.

In step 63, the mobile terminal sends the person characteristic information to the server.

Optionally, when the mobile terminal is connected to a network, the extracted person characteristic information is uploaded to a cloud server so that the server performs person characteristic recognition using a corresponding recognition algorithm. For example, if the person characteristic information is face characteristic information, the face characteristic information will be recognized using a human face recognition algorithm, so as to judge whether there is target address information of a contact associated with the person characteristic information in a cloud contact information database.

In step 64, the server receives the person characteristic information sent by the mobile terminal.

The server, also referred to as servo, is a device for providing computing service, and can carry out processing in response to service requests from the mobile terminal. Therefore, in this embodiment, the server can receive the person characteristic information sent by the mobile terminal and recognize the person characteristic information.

In step 65, the server judges whether there is target address information of a contact associated with the person characteristic information in a cloud contact information database, to obtain a judgment result.

Generally, the server stores contact data of the mobile terminal, that is, relevant contacts of the mobile terminal are synchronized to the server. Therefore, when the server receives the person characteristic information of the target image, it can perform comparison of person characteristic information under the control of its processor and provide a judgment result regarding whether there is target address information of a contact associated with the person characteristic information in the cloud contact information database.

In step 66, the server feeds back the judgment result to the mobile terminal.

The server feeds back the judgment result to the mobile terminal, so that the mobile terminal can perform corresponding processing on the target image according to the judgment result.

In step 67, the mobile terminal receives the judgment result returned by the server.

Optionally, the judgment result is that there is target address information of a contact associated with the person characteristic information in the cloud contact information database corresponding to the mobile terminal or that there is no target address information of a contact associated with the person characteristic information in the cloud contact information database corresponding to the mobile terminal.

In step 68, the mobile terminal sends the target image to the target terminal associated with the person characteristic information, if the judgment result is that there is target address information of a contact associated with the person characteristic information in the cloud contact information database corresponding to the mobile terminal.

Optionally, if the judgment result is that there is no target address information of a contact associated with the person characteristic information in the cloud contact information database corresponding to the mobile terminal, the target image is stored but not shared.

In summary, in the image sending method provided in this embodiment, a mobile terminal acquires a target image, extracts person characteristic information from the target image, and sends the person characteristic information to a server. After receiving the person characteristic information sent by the mobile terminal, the server judges whether there is target address information of a contact associated with the person characteristic information in a cloud contact information database, and feeds back the obtained judgment result to the mobile terminal. The mobile terminal determines whether to send the image according to the judgment result. As such, the accuracy of recognition of person characteristic information is high, and the feasibility of automatic image sending is enhanced, thereby effectively simplifying the procedure of image sending, improving the timeliness and feasibility of automatic image sending, and effectively improving the convenience of the user's operation.

Optionally, in the embodiment shown in Fig. 6, after the mobile terminal receives the judgment result returned by the server, if the judgment result is that there is target address information of a contact associated with the person characteristic information in the cloud contact information database corresponding to the mobile terminal, then the mobile terminal further judges whether there is a record of sending an image to a target terminal corresponding to the target address information and whether the automatic image sending function is enabled, and performs corresponding steps according to the judgment result. The particular implementation of the judgment is consistent with that shown in Fig. 5. Therefore, reference can be made to the embodiment shown in Fig. 5 for details of the implementation, which will not be described here redundantly.

The following is apparatus embodiments of the present invention which can be used to execute the method embodiments of the present invention. As to details not disclosed in the apparatus embodiments of the present invention, reference can be made to the method embodiments of the present invention.

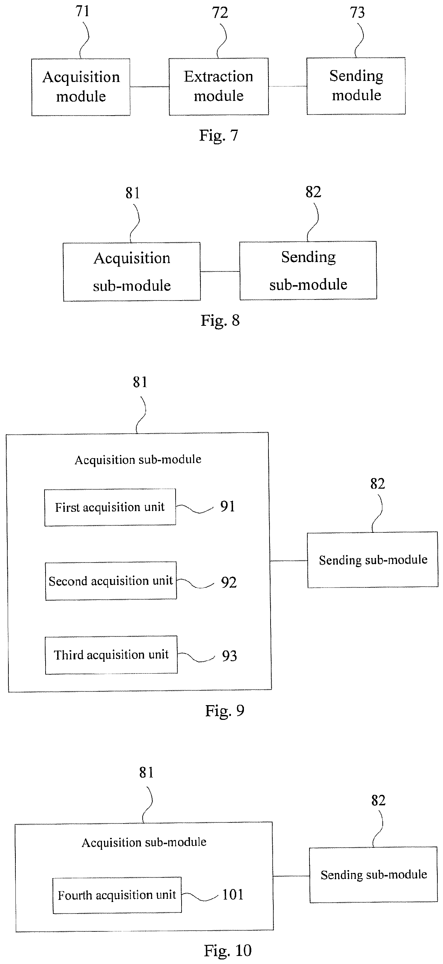

Fig. 7 is a block diagram of an image sending apparatus according to an exemplary embodiment. The image sending apparatus may be implemented as a mobile terminal or server or part of it through software, hardware or a combination thereof. As shown in Fig. 7, the image sending apparatus includes: an acquisition module 71, an extraction module 72 and a sending module 73.

The acquisition module 71 is configured to acquire a target image.

The extraction module 72 is configured to extract person characteristic information from the target image acquired by the acquisition module 71.

The sending module 73 is configured to send the target image to a target terminal associated with the person characteristic information extracted by the extraction module 72.

In summary, the image sending apparatus provided in this embodiment acquires a target image through an acquisition module, extracts person characteristic information from the target image through an extraction module and sends the target image to a target terminal associated with the person characteristic information extracted by the extraction module through a sending module. As such, the technical solution of the disclosed embodiment allows the target image to be sent in time and automatically, not only simplifies cumbersome operations for image sending and effectively improves convenience of a user's operation but also solves the problem of omitting to send an image due to a delay of the sending, and is of high feasibility and high timeliness.

As an example, in the image sending apparatus provided in the above embodiment, the acquisition module 71 is configured to acquire the target image through an image collection device.

Fig. 8 is a block diagram of an image sending apparatus according to another exemplary embodiment. The image sending apparatus may be implemented as a mobile terminal or server or part of it through software, hardware or a combination thereof. The embodiment of the present invention further describes the image sending apparatus on the basis of the embodiment shown in Fig. 7. As shown in Fig. 8, the sending module 73 includes: an acquisition sub-module 81 and a sending sub-module 82.

The acquisition sub-module 81 is configured to acquire target address information of a contact associated with the person characteristic information extracted by the extraction module 72.

The sending sub-module 82 is configured to send the target image to the target terminal according to the target address information acquired by the acquisition sub-module 81.

The image sending apparatus provided in the embodiment of the present application is used for performing the technical solution of the image sending method shown in Fig. 2. The implementation and technical effect of the apparatus are similar to those of the method, and will not be described here redundantly.

Optionally, in the apparatus for sending an image provided in the above embodiment, the person characteristic information further includes at least one of: clothes information, accessories information, and body type characteristic informtion.

As an example, Fig. 9 is a block diagram of an image sending apparatus according to still another exemplary embodiment. The image sending apparatus may be implemented as a mobile terminal or server or part of it through software, hardware or a combination thereof. The embodiment of the present invention further describes the image sending apparatus on the basis of the above embodiment. In the image sending apparatus provided in the above embodiment, as shown in Fig. 9, if the person characteristic information includes face characteristic information, then the acquisition sub-module 81 includes a first acquisition unit 91, a second acquisition unit 92 and a third acquisition unit 93.

The first acquisition unit 91 is configured to acquire a contact information database which includes correspondences between head portrait information and address information of contacts.

The second acquisition unit 92 is configured to traverse the contact information database to acquire target head portrait information corresponding to the face characteristic information.

The third acquisition unit 93 is configured to acquire target address information corresponding to the target head portrait information from the contact information database.

The image sending apparatus provided in the embodiment of the present application is used for performing the technical solution of the image sending method shown in Fig. 3. The implementation and technical effect of the apparatus are similar to those of the method, and will not be described here redundantly.

Optionally, in the image sending apparatus provided in the above embodiment, the target address information includes any one of: a target account and a phone number.

As an example, Fig. 10 is a block diagram of an image sending apparatus according to yet another exemplary embodiment. The image sending apparatus may be implemented as a mobile terminal or server or part of it through software, hardware or a combination thereof. The embodiment of the present invention further describes the image sending apparatus on the basis of the above embodiment. In the image sending apparatus provided in the above embodiment, as shown in Fig. 10, if the target address information includes a target account, then the acquisition sub-module 81 includes a fourth acquisition unit 101.

The fourth acquisition unit 101 is configured to acquire the target account from a contact database of a target application.

The sending sub-module 82 is further configured to send, by means of the target application, the target image to a target terminal which has logged on the target account.

The image sending apparatus provided in the embodiment of the present application is used for performing the technical solution of the image sending method shown in Fig. 4. The implementation and technical effect of the apparatus are similar to those of the method, and will not be described here redundantly.

As to the apparatus in the above embodiments, the specific manners for respective modules to perform operations have been described in detail in embodiments related to the methods, and will not be elaborated here.

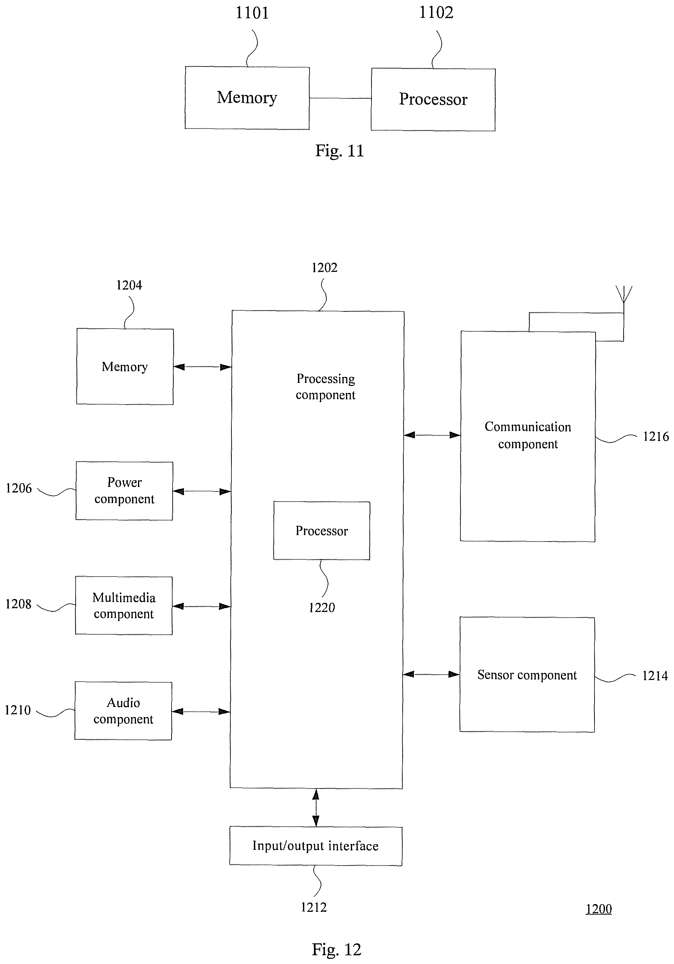

The foregoing describes the inner functional modules and schematic structures of the image sending apparatus. Fig. 11 is a physical block diagram of an image sending apparatus according to an exemplary embodiment. As shown in Fig. 11, the image sending apparatus includes: a memory 1101 and a processor 1102.

The memory 1101 is configured to store instructions executable by the processor.

The processor 1102 is configured to: acquire a target image; extract person characteristic information from the target image; and send the target image to a target terminal associated with the person characteristic information.

It should be noted that, in the embodiment of the image sending apparatus provided in Fig. 11, the processor may be a central processing unit (CPU) or any other general-purpose processor, a digital signal processor (DSP), an application specific integrated circuit (ASIC) and so on. The general-purpose processor may be a microprocessor or any other conventional processor and so on. The above memory may be a read-only memory (ROM), a random access memory (RAM), a flash memory, a hard disk or a solid state disk. A SIM card is also referred to as a subscriber identity card or smart card, and a digital mobile phone cannot be used until such a card is mounted in the mobile phone. That is, information on a user of the digital mobile phone, an encryption key and the user's phonebook and so on are stored in the computer chip. The steps of the method disclosed in the embodiments of the present invention may be directly executed by a hardware processor or by a combination of hardware of a processor and software modules.

Fig. 12 is a block diagram of an image sending apparatus according to an exemplary embodiment. For example, the apparatus 1200 may be a mobile phone, a computer, a digital broadcast terminal, a messaging device, a gaming console, a tablet, a medical device, exercise equipment, a personal digital assistant or the like.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214 and a communication component 1216.

The processing component 1202 generally controls the overall operations of the apparatus 1200, such as operations associated with display, phone call, data communications, camera operations and recording operations. The processing component 1202 may include one or more processors 1220 to execute instructions to perform all or part of the steps in the above described methods. In addition, the processing component 1202 may include one or more modules to facilitate the interaction between the processing component 1202 and other components. For example, the processing component 1202 may include a multimedia module to facilitate the interaction between the multimedia component 1208 and the processing component 1202.

The memory 1204 is configured to store various types of data to support the operations of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power supply management system, one or more power sources, and any other components associated with the generation, management, and distribution of power in the apparatus 1200.

The multimedia component 1208 includes a screen providing an output interface between the apparatus 1200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive external multimedia data while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216.In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200.For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor or a temperature sensor.

The communication component 1216 is configured to facilitate wired or wireless communication between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast related information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer readable storage medium including instructions, such as included in the memory 1204, executable by the processor 1220 of the apparatus 1200, for performing the above-described methods. For example, the non-transitory computer-readable storage medium may be a ROM, a RAM, a CD-ROM, a magnetic tape, a floppy disc, an optical data storage device, and the like.

The non-transitory computer-readable storage medium stores executable instructions that, when executed by the processor of the apparatus 1200, cause the apparatus 1200 to execute the image sending methods provided in the above various embodiments.

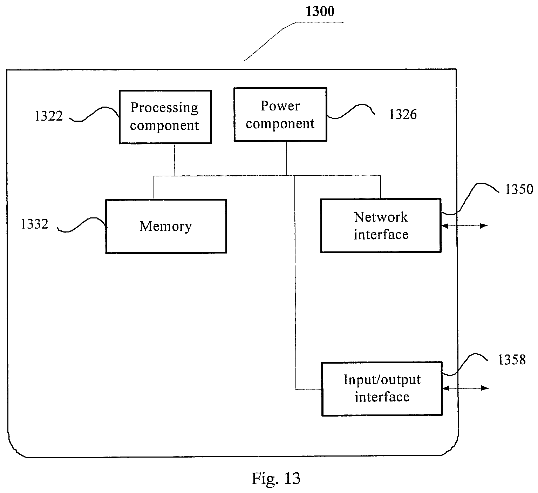

Fig. 13 is a block diagram of an image sending apparatus according to an exemplary embodiment. For example, the apparatus 1300 may be provided as a server associated with a mobile terminal. Referring to Fig. 13, the apparatus 1300 includes a processing component 1322 which further includes one or more processors and memory resources represented by a memory 1332 for storing instructions executable by the processing component 1322, such as an application. The application stored in the memory 1332 may include one or more modules each corresponding to a group of instructions. In addition, the processing component 1322 is configured to execute instructions so as to execute the above-described image sending method.

The apparatus 1300 may also include a power component 1326 configured to execute the power supply management of the apparatus 1300, one or more wireless network interfaces 1350 configured to connect the apparatus to a network and an input/output (I/O) interface 1358. The apparatus 1300 may operate an operating system stored in the memory 1332, such as Windows ServerTM, Mac OS XTM, UnixTM, LinuxTM, FreeBSDTM or the like.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and embodiments be considered as exemplary only, with a true scope and spirit of the present invention being indicated by the appended claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. An image sending method, comprising:
acquiring (11) a target image;
extracting (12) person characteristic information from the target image; and
sending (13) the target image to a target terminal associated with the person characteristic information.

2. The method according to claim 1, wherein the step (11) of acquiring the target image comprises:
acquiring the target image through an image collection device.

3. The method according to claim 1 or 2, wherein the step of sending (13) the target image to the target terminal associated with the person characteristic information comprises:
acquiring (21) target address information of a contact associated with the person characteristic information; and
sending (22) the target image to the target terminal according to the target address information.

4. The method according to any one of claims 1 to 3, wherein the person characteristic information comprises face characteristic information; and
the step of acquiring (21) the target address information of the contact associated with the person characteristic information comprises:
acquiring (31) a contact information database which comprises correspondences between head portrait information and address information of contacts;
traversing (32) the contact information database to acquire target head portrait information corresponding to the face characteristic information; and
acquiring (33) target address information corresponding to the target head portrait information from the contact information database.

5. The method according to claim 4, wherein the person characteristic information further comprises at least one of clothes information, accessories information and body type characteristic information; and the target address information comprises any one of a target account and a phone number.

6. The method according to any one of claims 1 to 5, wherein the target address information comprises the target account;
acquiring the target address information of the contact associated with the person characteristic information comprises: acquiring (41) the target account from a contact database of a target application; and
sending the target image to the target terminal according to the target address information comprises: (42) sending, by means of the target application, the target image to a target terminal which has logged on the target account.

7. An image sending apparatus, comprising:
an acquisition module (71) configured to acquire a target image;
an extraction module (72) configured to extract person characteristic information from the target image acquired by the acquisition module; and
a sending module (73) configured to send the target image to a target terminal associated with the person characteristic information extracted by the extraction module.

8. The apparatus according to claim 7, wherein
the acquisition module (71) is configured to acquire the target image through an image collection device.

9. The apparatus according to claim 7 or 8, wherein the sending module (73) comprises:
an acquisition sub-module (81) and a sending sub-module (82);
the acquisition sub-module is configured to acquire target address information of a contact associated with the person characteristic information extracted by the extraction module; and
the sending sub-module is configured to send the target image to the target terminal according to the target address information acquired by the acquisition sub-module.

10. The apparatus according to claim 9, wherein the person characteristic information comprises face characteristic information;
the acquisition sub-module (81) comprises: a first acquisition unit (91), a second acquisition unit (92) and a third acquisition unit (93);
the first acquisition unit is configured to acquire a contact information database which comprises correspondences between head portrait information and address information of contacts;
the second acquisition unit is configured to traverse the contact information database to acquire target head portrait information corresponding to the face characteristic information; and
the third acquisition unit is configured to acquire target address information corresponding to the target head portrait information from the contact information database.

11. The apparatus according to claim 10, wherein the person characteristic information further comprises at least one of clothes information, accessories information, and body type characteristic information; and the target address information comprises any one of a target account and a phone number.

12. The apparatus according to claim 11, wherein the target address information comprises the target account;
the acquisition sub-module (81) comprises: a fourth acquisition unit (101);
the fourth acquisition unit (101) is configured to acquire the target account from a contact database of a target application; and
the sending sub-module (82) is further configured to send, by means of the target application, the target image to a target terminal which has logged on the target account.

13. An image sending apparatus, comprising:
a processor (1220);
a memory (1204) for storing instructions executable by the processor;
wherein the processor (1220) is configured to:
acquire a target image;
extract person characteristic information from the target image; and
send the target image to a target terminal associated with the person characteristic information.

14. A computer program including instructions for executing the steps of an image sending method according to any one of claims 1 to 6, when said program is executed by a computer.

15. A recording medium readable by a computer and having recorded thereon a computer program including instructions for executing the steps of an image sending method according to any one of claims 1 to 6.
